# EUROPEAN PATENT SPECIFICATION

(11) **EP 4 207 468 B1**
(45) Date of publication and mention of the grant of the patent: **14.10.2026**
(21) Application number: 21883261.6
(22) Date of filing: 20.10.2021
(51) Int. Cl.: H01M 50/446, H01M 50/449, H01M 10/052, H01G 11/52, H01M 50/423, H01M 50/489, H01M 10/0525, H01M 50/414, H01M 50/417, H01M 50/42, H01M 50/431, H01M 50/443, H01M 50/451, H01M 50/457

(54) **SEPARATOR AND ELECTROCHEMICAL DEVICE INCLUDING THE SAME**
SEPARATOR UND ELEKTROCHEMISCHE VORRICHTUNG, DIE DIESEN ENTHÄLT
SÉPARATEUR ET DISPOSITIF ÉLECTROCHIMIQUE LE COMPRENANT

(30) Priority: 20.10.2020 KR 20200136313
(43) Date of publication of application: 05.07.2023
(60) Divisional application: 26202237.9 / 4 822 874
(73) Proprietor: LG Energy Solution, Ltd., Seoul 07335 (KR)
(72) Inventor: YOU, Tae-Sun, Daejeon 34122 (KR); LEE, Sang-Joon, Daejeon 34122 (KR)
(74) Representative: Hoffmann Eitle
(86) International application number: PCT/KR2021/014760
(87) International publication number: WO 2022/086193

(56) References cited:
- CN-A- 108 305 973
- KR-A- 20100 030 104
- KR-A- 20130 022 395
- KR-A- 20180 003 177
- KR-A- 20190 093 444
- KR-A- 20200 050 439
- US-A1- 2015 072 213

## Description

### TECHNICAL FIELD

The present disclosure relates to a separator and an electrochemical device including the same. Particularly, the present disclosure relates to a separator showing improved adhesion to an electrode in an electrolyte, and an electrochemical device including the same.

The present application claims priority to Korean Patent Application No. 10-2020-0136313 filed on October 20, 2020 in the Republic of Korea.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte. However, such lithium-ion batteries cause safety-related problems, such as ignition and explosion, due to the use of an organic electrolyte, and have a disadvantage in that they are difficult to manufacture.

More recently, lithium-ion polymer batteries have improved such disadvantages of lithium-ion batteries and have been expected as one of the next-generation batteries. However, such lithium-ion polymer batteries still provide relatively lower capacity as compared to lithium-ion batteries, and particularly show insufficient discharge capacity at low temperature. Therefore, there is an imminent need for improving such a disadvantage.

Although such electrochemical devices have been produced from many production companies, safety characteristics thereof show different signs. Evaluation and securement of safety of such electrochemical devices are very important. The most important consideration is that electrochemical devices should not damage users upon their malfunction. For this purpose, safety standards strictly control ignition and smoke emission in electrochemical devices. With regard to safety characteristics of electrochemical devices, there is great concern about explosion when an electrochemical device is overheated to cause thermal runaway or perforation of a separator. Particularly, a polyolefin-based porous substrate used conventionally as a separator for an electrochemical device shows a severe heat shrinking behavior at a temperature of 100°C or higher due to its material property and a characteristic during its manufacturing process, including orientation, thereby causing a short-circuit between a cathode and an anode.

To solve the above-mentioned safety problems of an electrochemical device, there has been suggested a separator having a porous organic-inorganic coating layer formed by applying a mixture of an excessive amount of inorganic particles with a binder polymer onto at least one surface of a porous substrate having a plurality of pores.

The binder polymers used for the porous organic-inorganic coating layer may be classified into organic binders and aqueous binders depending on the type of dispersion medium of the composition for forming a coating layer. According to the related art, organic dispersion media and organic binders have been used frequently. However, aqueous dispersion media and aqueous binders have been given an increasing attention, as the environmental problem have become a particular issue recently.

Herein, one of the technical problems of the aqueous binders, as compared to the organic binders, is to ensure wet adhesion and long-term adhesion.

Since the binder molecules infiltrate into a substrate with the lapse of time after adhesion, in the case of organic binders, adhesion is increased gradually. Thus, even when an electrode undergoes swelling/shrinking in a state wetted with an electrolyte during cycles, it is possible to retain adhesion with ease.

US 2015/0072213 A1 describes a porous membrane for a secondary battery, including non-conductive particles and a binder for a porous membrane, wherein the non-conductive particle is a polymer particle having a core-shell structure. CN 108305973 A describes a coated composite membrane comprising a base film and a high temperature resistant coating applied to at least one surface of the base film, wherein the high temperature resistant coating is nanocellulose crystals grafted with polyethylene glycol on the coated surfaces. KR 2018/0003177 A describes a separator for a secondary battery comprising a porous substrate and a heat resistance layer located on at least one surface of the porous substrate, wherein the heat resistance layer includes a first binder, a second binder and a filler, and the first binder has a core-shell structure. KR 2020/0050439 A describes a separator comprising a porous polymer base material having a plurality of pores; and a porous coating layer including core-shell-type polymer particles positioned on at least one surface of the porous polymer base material and provided with a plurality of inorganic particles, a core unit, and a shell unit enclosing the core unit, and a binder polymer positioned on a portion or all of the surfaces of the core-shell-type polymer particles and the inorganic particles to connect and fix gaps between the core-shell-type polymer particles and the inorganic particles.

On the contrary, in the case of aqueous binders, there is substantially no increase in adhesion with the lapse of time, since the aqueous binders are not dissolved in an electrolyte and show no entanglement effect. Therefore, it is more likely that such aqueous binders cause interfacial separation due to the lack of adhesion in a state wetted with an electrolyte and under the condition of electrode swelling/shrinking during cycles, resulting in degradation of the life characteristics of a battery.

To overcome the above-mentioned problem, there has been suggested adding an additive having an entanglement effect to a composition for forming a porous coating layer. However, in this case, the additive may cause side effects, such as blocking of the pores of the porous polymer substrate.

### DISCLOSURE

### Technical Problem

The present disclosure is designed to solve the problems of the related art, and therefore the present disclosure is directed to providing a separator showing improved adhesion to an electrode in an electrolyte.

The present disclosure is also directed to providing an electrochemical device including the separator.

### Technical Solution

The present disclosure provides a separator as further defined in the claims.

According to the first embodiment according to the invention, the separator includes:
a porous polymer substrate; and
a porous coating layer disposed on at least one surface of the porous polymer substrate, and including a plurality of inorganic particles and a binder polymer disposed partially or totally on the surfaces of the inorganic particles so that the inorganic particles may be interconnected and fixed,
wherein the binder polymer includes core-shell type polymer particles having a core portion and a shell portion surrounding the core portion,
the core portion polymer contained in the core portion and the shell portion polymer contained in the shell portion have a different glass transition temperature, and
a polymer containing an ingredient capable of being eluted with an electrolyte and linked through a chemical bond is grafted to the surface of the shell portion.

According to one alternative of the first embodiment, the core portion polymer has a glass transition temperature of 85°C or higher, and the shell portion polymer has a glass transition temperature of -100 to 20°C.

The core portion polymer of this alternative may include polystyrene, polystyrene copolymer, polymethyl methacrylate, polymethyl methacrylate copolymer, polyamide-based polymer, or two or more of them, and the shell portion polymer includes acrylate-based polymer, rubber-based polymer, urethane-based polymer, silicone-based polymer, or two or more of them.

According to another alternative of the first embodiment, the core portion polymer has a glass transition temperature of -100 to 20°C, and the shell portion polymer has a glass transition temperature of 85°C or higher.

The core portion polymer of this alternative may include acrylate-based polymer, rubber-based polymer, urethane-based polymer, silicone-based polymer, or two or more of them, and the shell portion polymer includes polystyrene-based polymer, poly(meth)acrylate-based polymer, polyamide-based polymer, or two or more of them.

The core-shell type polymer particles may have an average particle diameter of 100 nm to 1 µm.

The ratio of the average particle diameter of the core portion based on the average particle diameter of the core-shell type polymer particles may be 50-90%.

The core-shell type polymer particle may include 100 parts by weight of the core portion and 100-300 parts by weight of the shell portion.

The polymer grafted to the surface of the shell portion includes polyvinyl alcohol (PVA) or copolymer thereof, polyethylene glycol (PEG) or copolymer thereof, polypropylene glycol (PPG) or copolymer thereof, polyvinyl acetate (PVAc) or copolymer thereof, polyacrylonitrile (PAN) or copolymer thereof, or two or more of them.

The content of the polymer grafted to the surface of the shell portion is 1-30 wt% based on the total weight of the core-shell type polymer particles.

The core-shell type polymer particles may include: core-shell type polymer particles in which the shell portion polymer has a higher glass transition temperature as compared to the core portion polymer; core-shell type polymer particles in which the shell portion polymer has a lower glass transition temperature as compared to the core portion polymer; or both.

The porous polymer substrate may be a polyolefin-based porous polymer substrate.

An electrochemical device according to the invention includes a cathode, an anode and a separator interposed between the cathode and the anode, wherein the separator is the same as defined herein.

The electrochemical may be a lithium secondary battery.

### Advantageous Effects

According to an embodiment of the present disclosure, the binder polymer used in the porous coating layer of a separator includes core-shell type polymer particles having a core portion and a shell portion surrounding the core portion, and a polymer containing an ingredient capable of being eluted with an electrolyte and linked through a chemical bond is grafted to the surface of the shell portion. In this manner, wet adhesion and interfacial retentivity between the separator and an electrode in an electrolyte are improved by the entanglement phenomenon between the grafted chain and the electrolyte, resulting in improvement of the long-term life characteristics of the electrochemical device using the separator.

**In** addition, the core portion polymer contained in the core portion of the core-shell type polymer particles and the shell portion polymer contained in the shell portion thereof are controlled to have a different glass transition temperature. Particularly, when a soft polymer having a lower glass transition temperature is used in the shell portion and a hard polymer having a higher glass transition temperature is used in the core portion, it is possible to overcome the disadvantage of an aqueous binder, i.e. degradation of infiltration ability of an electrolyte into the interface with the binder polymer, and thus it is possible to significantly enhance the adhesion between the separator and an electrode in a state wetted with the electrolyte. **In** addition, when a hard polymer having a higher glass transition temperature is used in the shell portion and a soft polymer having a lower glass transition temperature is used in the core portion, it is possible to inhibit excessive swelling caused by the impregnation of the soft polymer of the core portion with the electrolyte, and thus it is possible to prevent reduction or blocking of the pores of the porous coating layer, caused by the swelling of the core-shell type polymer particles, so that air permeability may be ensured and the problem of an increase in resistance may be solved.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

**In** one aspect of the present disclosure, there is provided a separator including:
a porous polymer substrate; and
a porous coating layer disposed on at least one surface of the porous polymer substrate, and including a plurality of inorganic particles and a binder polymer disposed partially or totally on the surfaces of the inorganic particles so that the inorganic particles may be interconnected and fixed,
wherein the binder polymer includes core-shell type polymer particles having a core portion and a shell portion surrounding the core portion,
the core portion polymer contained in the core portion and the shell portion polymer contained in the shell portion have a different glass transition temperature, and
a polymer containing an ingredient capable of being eluted with an electrolyte and linked through a chemical bond is grafted to the surface of the shell portion.

According to an embodiment of the present disclosure, the core portion polymer may have a glass transition temperature higher than the glass transition temperature of the shell portion polymer.

**In** this embodiment, the core portion polymer has a glass transition temperature of 85°C or higher, 85-150°C, or 85-100°C. The shell portion polymer has a glass transition temperature of **-100** to 20°C, -70 to 20°C, or -40 to 20°C.

Particular examples of the core portion polymer include polystyrene-based polymer, poly(meth)acrylate-based polymer, polyamide-based polymer, or two or more of them. Particular examples of the shell portion polymer include acrylate-based polymer, rubber-based polymer, urethane-based polymer, silicone-based polymer, or two or more of them.

More particularly, the poly(meth)acrylate-based polymer may include homopolymer or copolymer of poly(meth)acrylate, homopolymer or copolymer of polyalkyl (meth)acrylate, poly(alkyl acrylate)-co-(alkyl (meth)acrylate), homopolymer or copolymer of polyfluoroalkyl (meth)acrylate, polyacrylonitrile, homopolymer or copolymer of polyester, or two or more of them. For example, the alkyl may be a C1-C30 alkyl, a C1-C15 alkyl, a C1-C10 alkyl, or a C1-C5 alkyl.

For example, polymer, such as polystyrene molecules, are present in a solid state at room temperature, and thus such polymer is vitreous and weak at room temperature. When observing polystyrene polymer, while increasing the temperature, the molecular backbone frozen at a specific temperature starts Brown motion (intramolecular motion caused by rotation of intramolecular bonds; the whole molecule does not move significantly enough to change its position), and thus the specific volume is increased rapidly and the polymer undergoes a change into a rubbery phase. Such a change in phase, i.e. a change from a vitreous phase into a rubbery phase is called glass transition, and a temperature where such a change in phase occurs is called a glass transition temperature, T_{g} (T represents temperature, and g is the initial letter of glass). Since polymer materials become hard, weak or soft around the temperature, T_{g} is regarded as one of the important physical properties of polymer. **In** addition, since polymer materials undergo a change in mechanical strength, dimension, or the like, at the temperature where Brown motion starts, i.e. T_{g}, application of a resin to a part of machine requires paying attention to the condition of use and T_{g} of the resin. A difference in T_{g} depending on the particular type of polymer results from a difference in structure or composition of polymer.

According to an embodiment of the present disclosure, the glass transition temperature may be determined by using a differential scanning calorimeter (DSC), or the like. Particular examples of DSC instruments include DSC (DSC823, METTLER TOLEDO), DSC (TA Instrument), or the like.

In the core-shell type polymer particles having a core portion and a shell portion surrounding the core portion, when the core portion has a T_{g} higher than the T_{g} of the shell portion, i.e. even when the T_{g} of the shell portion positioned on the surface portion of the core-shell type polymer particles is reduced in order to improve the adhesion between the separator and an electrode, the particles can retain their shapes due to the high T_{g} of the core portion, and thus the separator does not cause an increase in resistance. Therefore, it is possible to minimize an increase in resistance and to enhance the adhesion to an electrode.

According to an embodiment of the present disclosure, the difference in T_{g} between the core portion of the core-shell type polymer particles and the shell portion thereof may be 10-200°C, 15-180°C, 20-160°C, or 20-80°C.

The ratio of the average particle diameter of the core portion based on the average particle diameter of the core-shell type polymer particles may be 50-90%, 60-90%, 70-90%, 80-90%, or 80-85%. When the ratio of the average particle diameter of the core portion based on the average particle diameter of the core-shell type polymer particles satisfies the above-defined range, the core portion retains its shape and the shell portion shows improved adhesion, resulting in improvement of the performance of the separator.

According to the present disclosure, the average particle diameter of the core-shell type polymer particles, that of the inorganic particles and that of the core portion may be determined by using a particle size analyzer (laser particle size analyzer available from Malvern). For example, the average particle diameter of the core portion may be determined after preparing the core portion, and the average particle diameter of the whole particles may be determined after preparing the shell portion.

The core-shell type polymer particles may include 100 parts by weight of the core portion and 10-300 parts by weight, 10-250 parts by weight, 80-250 parts by weight, 120-250 parts by weight, 200-250 parts by weight, or 80-120 parts by weight of the shell portion. When the weight ratio of the core portion to the shell portion satisfies the above-defined range, it is possible to control an increase in battery resistance through the improvement of air permeability, while providing improved wet adhesion characteristics.

According to an embodiment of the present disclosure, the core portion polymer may have a glass transition temperature lower than the glass transition temperature of the shell portion polymer. **In** other words, the shell portion polymer may have a higher glass transition temperature as compared to the core portion polymer.

**In** this embodiment, the shell portion polymer has a glass transition temperature of 85°C or higher, 85-150°C, or 85-100°C. The core portion polymer has a glass transition temperature of **-100** to 20°C, -70 to 20°C, or -40 to 20°C.

Particular examples of the shell portion polymer include polystyrene-based polymer, poly(meth)acrylate-based polymer, polyamide-based polymer, or two or more of them.

Particular examples of the core portion polymer include acrylate-based polymer, rubber-based polymer, urethane-based polymer, silicone-based polymer, or two or more of them.

More particularly, the poly(meth)acrylate-based polymer may include homopolymer or copolymer of poly(meth)acrylate, homopolymer or copolymer of polyalkyl (meth)acrylate, poly(alkyl acrylate)-co-(alkyl (meth)acrylate), homopolymer or copolymer of polyfluoroalkyl (meth)acrylate, polyacrylonitrile, homopolymer or copolymer of polyester, or two or more of them. For example, the alkyl may be a C1-C30 alkyl, a C1-C15 alkyl, a C1-C10 alkyl, or a C1-C5 alkyl.

The ratio of the average particle diameter of the core portion based on the average particle diameter of the core-shell type polymer particles may be 50-90%, 60-90%, 70-90%, 80-90%, or 80-85%. When the ratio of the average particle diameter of the core portion based on the average particle diameter of the core-shell type polymer particles satisfies the above-defined range, the core portion is inhibited from swelling through the shell portion, while the core portion retains adhesion, resulting in improvement of the performance of the separator.

**In** the core-shell type polymer particles according to the present disclosure, a polymer containing an ingredient capable of being eluted with an electrolyte and linked through a chemical bond is grafted to the surface of the shell portion.

Herein, 'polymer containing an ingredient capable of being eluted with an electrolyte' means polymer provided with a chemical structure having affinity to the electrolyte in at least one position selected from the backbone and side chain of the polymer so that no phase separation may occur between the polymer and the electrolyte upon the mixing with the electrolyte.

The grafted polymer includes polyvinyl alcohol (PVA) or copolymer thereof, polyethylene glycol (PEG) or copolymer thereof, polypropylene glycol (PPG) or copolymer thereof, polyvinyl acetate (PVAc) or copolymer thereof, polyacrylonitrile (PAN) or copolymer thereof, or two or more of them.

The content of the grafted polymer is 1-30 wt%, and may be 1-25 wt%, or 1-20 wt%, based on the total weight of the core-shell type polymer particles. When the content of the grafted polymer satisfies the above-defined range, it is possible to improve the adhesion between the separator and an electrode through the entanglement with the electrolyte, to improve the interfacial retentivity between the separator and the electrode, to improve the long-term life characteristics of the electrochemical device using the separator, and to contribute to cell stability.

According to an embodiment of the present disclosure, the method for grafting a polymer containing an ingredient capable of being eluted with an electrolyte to the surface of the shell portion may include the steps of: (1) mixing the core-shell type polymer particles dispersed in a solvent with the polymer capable of being eluted with an electrolyte (e.g. polymer having high crosslinking activity through the treatment with a coupling agent), dispersed in a solvent; (2) carrying out sonification treatment; (3) removing unreacted materials through centrifugal separation; and (4) vacuum drying the remaining product.

The core-shell type polymer particles may have an average particle diameter of 100 nm to 1 µm, 300 nm to 1 µm, or 300-800 nm. When the average particle diameter of the core-shell type polymer particles satisfies the above-defined range, it is possible to form a porous coating layer as a thin film and to perform mixing with inorganic particles homogeneously, when the porous coating layer further includes inorganic particles.

According to an embodiment of the present disclosure, the core-shell type polymer particles may include: core-shell type polymer particles in which the shell portion polymer has a higher glass transition temperature as compared to the core portion polymer; core-shell type polymer particles in which the shell portion polymer has a lower glass transition temperature as compared to the core portion polymer; or both of the core-shell type polymer particles.

Particularly, the core-shell type polymer particles may include core-shell type polymer particles in which the core portion polymer has a higher glass transition temperature as compared to the shell portion polymer, alone; core-shell type polymer particles in which the core portion polymer has a lower glass transition temperature as compared to the shell portion polymer, alone; or a combination of the core-shell type polymer particles in which the core portion polymer has a higher glass transition temperature as compared to the shell portion polymer with the core-shell type polymer particles in which the core portion polymer has a lower glass transition temperature as compared to the shell portion polymer. When using the combination of two types of particles, the weight ratio of the particles in which the core portion polymer has a higher glass transition temperature as compared to the shell portion polymer to the particles in which the core portion polymer has a lower glass transition temperature as compared to the shell portion polymer may be 9:1-1:9, 7:3-3:7, 7:3-5:5, or 5:5-7:3.

According to the present disclosure, the average particle diameter (D50) of the core-shell type polymer particles and that of the inorganic particles as described hereinafter may be defined as a particle diameter at a point of 50% in the particle diameter distribution. For example, the average particle diameter (D50) of the core-shell type polymer particles and that of the inorganic particles may be determined by using electron microscopy using scanning electron microscopy (SEM) or field emission scanning electron microscopy (FE-SEM), or by using the laser diffraction method. Particularly, in the case of the laser diffraction method, the average particle diameter (D50) may be determined by dispersing the core-shell type polymer particles or inorganic particles in a dispersion medium, introducing the resultant product to a commercially available laser diffraction particle size analyzer (e.g. Microtrac MT 3000), irradiating ultrasonic waves with a frequency of about 28 kHz thereto at an output of 60 W, and calculating the average particle diameter (D50) at a point of 50% in the particle diameter distribution determined by the analyzer.

Particularly, the porous polymer substrate may be a porous polymer film substrate or a porous polymer nonwoven web substrate.

The porous polymer film substrate may be a porous polymer film including polyolefin, such as polyethylene or polypropylene. Such a polyolefin porous polymer film substrate realizes a shut-down function at a temperature of 80-130°C.

Herein, the polyolefin porous polymer film substrate may be formed of polymers including polyolefin polymers, such as polyethylene, including high-density polyethylene, linear low-density polyethylene, low-density polyethylene or ultrahigh-molecular weight polyethylene, polypropylene, polybutylene, or polypentene, alone or in combination of two or more of them.

In addition, the porous polymer film substrate may be obtained by molding various polymers, such as polyesters, other than polyolefins, into a film shape. Further, the porous polymer film substrate may have a stacked structure of two or more film layers, wherein each film layer may be formed of polymers including the above-mentioned polymers, such as polyolefins or polyesters, alone or in combination of two or more of them.

In addition, the porous polymer film substrate and porous polymer nonwoven web substrate may be formed of polyethylene terephthalate, polybutylene terephthalate, polyester, polyacetal, polyamide, polycarbonate, polyimide, polyetherether ketone, polyether sulfone, polyphenylene oxide, polyphenylene sulfide, or polyethylene naphthalene, alone or in combination, besides the above-mentioned polyolefins.

There is no particular limitation in the thickness of the porous polymer substrate, the porous polymer substrate has a thickness of 1-100 µm, particularly 5-50 µm. Although there is no particular limitation in the size of the pores present in the porous polymer substrate and porosity, the pore size and porosity may be 0.01-50 µm and 10-95%, respectively.

Particular examples of the inorganic particles contained in the porous coating layer may include high-dielectric constant inorganic particles having a dielectric constant of 5 or more, particularly 10 or more, inorganic particles capable of transporting lithium ions, or a mixture thereof.

Non-limiting examples of the inorganic particles having a dielectric constant of 5 or more may include BaTiO₃, Pb(Zr,Ti)O₃ (PZT), Pb₁₋ₓLaₓZr_{1-y}Ti_{y}O₃ (PLZT), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, TiO₂, SiC, AlO(OH), Al₂O₃.H₂O, or a mixture thereof.

As used herein, the term 'inorganic particles capable of transporting lithium ions' refers to inorganic particles containing lithium elements, not storing lithium therein but transporting lithium ions. Non-limiting examples of the inorganic particles capable of transporting lithium ions include lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (1 < x < 4, 0 < y < 13), such as 14Li₂O-9Al₂O₃-38TiO₂-39P₂O₅, lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), such as Li_{3.25}Ge_{0.25}P_{0.75}S₄, lithium nitride (LiₓN_{y}, 0 < x < 4, 0 < y < 2), such as Li₃N, SiS₂-based glass (LiₓSi_{y}S_{z}, 0 < x < 3, 0 < y < 2, 0 < z < 4), such as Li₃PO₄-Li₂S-SiS₂, P₂S₅-based glass (LiₓP_{y}S_{z}, 0 < x < 3, 0 < y < 3, 0 < z < 7), such as LiI-Li₂S-P₂S₅, or a mixture thereof.

In addition, the ratio of the average particle diameter of the core-shell type polymer particles based on the average particle diameter of the inorganic particles may be 80-200%, particularly 80-190%, or 84-188%. When the ratio of the average particle diameter of the core-shell type polymer particles based the average particle diameter of the inorganic particles is 80-200%, the core-shell type polymer particles may be distributed on the surface of the separator so that the separator may be adhered with an electrode advantageously.

Although there is no particular limitation in the thickness of the porous coating layer, the thickness may be 1-10 µm, or 1.5-6 µm. Also, the porosity of the porous coating layer is not particularly limited, but it may be preferably 35-65%.

The weight ratio of the core-shell type polymer particles to the inorganic particles may be 5:95-80:20, 20:80-80:20, or 50:50-80:20. When the weight ratio satisfies the above-defined range, it is possible to improve the stability of a battery by virtue of the core-shell type polymer particles, while ensuring the heat resistance of the porous coating layer.

The separator according to an embodiment of the present disclosure may further include other additives as ingredients of the porous coating layer.

According to an embodiment of the present disclosure, the porous coating layer may be an aqueous coating layer using aqueous slurry. **In** the case of an aqueous coating layer, it facilitates thin film coating and reduces the resistance of a separator advantageously.

The method for manufacturing a separator according to an embodiment of the present disclosure will be explained hereinafter.

To form a porous coating layer, inorganic particles and core-shell type polymer particles are added to and dispersed in an aqueous dispersion medium to prepare a composition for forming a porous coating layer. The inorganic particles may be added after they are pulverized in advance to a predetermined average particle diameter. Otherwise, the inorganic particles may be added to a binder polymer solution, and then pulverized and dispersed, while controlling them to have a predetermined diameter by using a ball milling process, or the like.

The core-shell type polymer particles may be prepared through various known methods, such as emulsion polymerization, suspension polymerization, massive polymerization, solution polymerization, bulk polymerization, or the like. For example, the core-shell type polymer particles may be prepared through emulsion polymerization.

Although there is no particular limitation in the method for coating the composition for forming a porous coating layer on the porous polymer substrate, it is preferred to use a slot coating or dip coating process. A slot coating process includes coating a composition supplied through a slot die onto the whole surface of a substrate and is capable of controlling the thickness of a coating layer depending on the flux supplied from a metering pump. **In** addition, a dip coating process includes dipping a substrate into a tank containing a composition to carry out coating and is capable of controlling the thickness of a coating layer depending on the concentration of the composition and the rate of removing the substrate from the tank. Further, in order to control the coating thickness more precisely, it is possible to carry out post-metering through a Mayer bar or the like, after dipping.

Then, the porous polymer substrate coated with the composition for forming a porous coating layer may be dried in a dryer, such as an oven, to form a porous coating layer on at least one surface of the porous polymer substrate.

After coating the composition for forming a porous coating layer on the porous polymer substrate, the dispersion medium may be removed by drying the composition at 90-180°C, particularly 100-150°C.

According to an embodiment of the present disclosure, the core-shell type polymer particles of the porous coating layer attach the inorganic particles to one another so that they may retain their binding states (i.e. the core-shell type polymer particles interconnect and fix the inorganic particles), and the inorganic particles may be bound to the porous polymer substrate by the core-shell type polymer particles. The inorganic particles and the core-shell type polymer particles of the porous coating layer may form interstitial volumes, while they are substantially in contact with one another. Herein, the interstitial volume means a space defined by the inorganic particles and the core-shell type particles that are in contact with one another substantially in a closely packed or densely packed structure of the inorganic particles and the core-shell type polymer particles. The interstitial volumes among the inorganic particles and the core-shell type polymer particles become vacant spaces to form pores of the porous coating layer. Herein, the polymer contained in the shell portion of the core-shell type polymer particles functions as a binder during the drying process so that the shell portions of the core-shell type polymer particles may be interconnected and fixed, and the porous polymer substrate may be interconnected with the core-shell type polymer particles. **In** this manner, it is possible to form a porous coating layer.

Non-limiting examples of the dispersion medium used herein include water alone, or a mixture of water with any one compound selected from methanol, ethanol, isopropyl alcohol and isopropanol.

**In** another aspect of the present disclosure, there is provided an electrochemical device including a cathode, an anode and a separator interposed between the cathode and the anode, wherein the separator is the above-described separator according to an embodiment of the present disclosure.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer secondary batteries, are preferred.

The two electrodes, cathode and anode, used in combination with the separator according to the present disclosure are not particularly limited, and may be obtained by allowing electrode active materials to be bound to an electrode current collector through a method generally known in the art. Among the electrode active materials, non-limiting examples of a cathode active material include conventional cathode active materials that may be used for the cathodes for conventional electrochemical devices. Particularly, lithium manganese oxides, lithium cobalt oxides, lithium nickel oxides, lithium iron oxides or lithium composite oxides containing a combination thereof are used preferably. Non-limiting examples of an anode active material include conventional anode active materials that may be used for the anodes for conventional electrochemical devices. Particularly, lithium-intercalating materials, such as lithium metal or lithium alloys, carbon, petroleum coke, activated carbon, graphite or other carbonaceous materials, are used preferably. Non-limiting examples of a cathode current collector include foil made of aluminum, nickel or a combination thereof. Non-limiting examples of an anode current collector include foil made of copper, gold, nickel, copper alloys or a combination thereof.

The electrolyte that may be used in the electrochemical device according to the present disclosure is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

First, alumina (Al₂O₃) having an average particle diameter (D50) of 500 nm and core-shell type polymer particles (CSG1), in which a polymer containing an ingredient capable of being eluted with an electrolyte and linked through a chemical bond was grafted to the surface of the shell portion, were mixed with each other in water at a weight ratio of 8:2, and the resultant mixture was dispersed together with beads for 2 hours by using a paint shaker to prepare slurry for a porous coating layer. Herein, the core portion of the core-shell type polymer particles includes polystyrene (T_{g}: 100°C), the shell portion includes polyurethane (T_{g}: -30°C), and the grafted polymer is polyvinyl alcohol. The content of the grafted polymer was 10 wt% based on the total weight of the core-shell type polymer particles. The core-shell type polymer particles had an average particle diameter (D50) of 300 nm. The ratio of the average particle diameter of the core portion based on the average particle diameter of the core-shell type polymer particles was 80%.

The resultant slurry was coated on both surfaces of a polyethylene porous film (thickness: 12 µm) through a dip coating process and dried at a temperature of 85°C for 2 hours to obtain a separator (total thickness: 15 µm) having a porous coating layer (thickness: 1.5 µm) on each of both surfaces thereof.

### Example 2

First, alumina (Al₂O₃) having an average particle diameter (D50) of 500 nm and core-shell type polymer particles (CSG2), in which a polymer containing an ingredient capable of being eluted with an electrolyte and linked through a chemical bond was grafted to the surface of the shell portion, were mixed with each other in water at a weight ratio of 8:2, and the resultant mixture was dispersed together with beads for 2 hours by using a paint shaker to prepare slurry for a porous coating layer. Herein, the core portion of the core-shell type polymer particles includes polyurethane (T_{g}: -30°C), the shell portion includes polystyrene (T_{g}: 100°C), and the grafted polymer is polyvinyl alcohol. The content of the grafted polymer was 10 wt% based on the total weight of the core-shell type polymer particles. The core-shell type polymer particles had an average particle diameter (D50) of 300 nm. The ratio of the average particle diameter of the core portion based on the average particle diameter of the core-shell type polymer particles was 80%.

The resultant slurry was coated on both surfaces of a polyethylene porous film (thickness: 12 µm) through a dip coating process and dried at a temperature of 85°C for 2 hours to obtain a separator (total thickness: 15 µm) having a porous coating layer (thickness: 1.5 µm) on each of both surfaces thereof.

### Example 3

First, alumina (Al₂O₃) having an average particle diameter (D50) of 500 nm, the core-shell type polymer particles (CSG1) including a polymer grafted to the surface of the shell portion according to Example 1, and the core-shell type polymer particles (CSG2) including a polymer grafted to the surface of the shell portion according to Example 2 were mixed with each other in water at a weight ratio of 8:1:1, and the resultant mixture was dispersed together with beads for 2 hours by using a paint shaker to prepare slurry for a porous coating layer.

The resultant slurry was coated on both surfaces of a polyethylene porous film (thickness: 12 µm) through a dip coating process and dried at a temperature of 85°C for 2 hours to obtain a separator (total thickness: 15 µm) having a porous coating layer (thickness: 1.5 µm) on each of both surfaces thereof.

### Comparative Example 1

A separator was obtained in the same manner as Example 1, except that alumina (Al₂O₃) having an average particle diameter (D50) of 500 nm was mixed with polyurethane (T_{g}: -30°C) as a binder polymer in water at a weight ratio of 8:2, and the resultant mixture was dispersed together with beads for 2 hours by using a paint shaker to prepare slurry for a porous coating layer.

### Comparative Example 2

A separator was obtained in the same manner as Example 1, except that slurry for a porous coating layer was prepared by using core-shell polymer particles, in which a polymer containing an ingredient capable of being eluted with an electrolyte and linked through a chemical bond was not grafted to the surface of the shell portion.

Herein, the core portion of the core-shell type polymer particles includes polystyrene (T_{g}: 100°C), and the shell portion includes polyurethane (T_{g}: -30°C).

### Comparative Example 3

A separator was obtained in the same manner as Example 2, except that slurry for a porous coating layer was prepared by using core-shell polymer particles, in which a polymer containing an ingredient capable of being eluted with an electrolyte and linked through a chemical bond was not grafted to the surface of the shell portion.

Herein, the core portion of the core-shell type polymer particles includes polyurethane (T_{g}: -30°C), and the shell portion includes polystyrene (T_{g}: 100°C).

### Test Methods and Results

### Method for Determining Glass Transition Temperature

The core-shell type polymer particles used according to Examples 1-3 and Comparative Examples 1-3 were determined in terms of the glass transition temperature (T_{g}) of each core portion and that of each shell portion by using a differential scanning calorimeter (DSC) (DSC823, METTLER TOLEDO).

### Average Particle Diameter (D50)

The average particle diameter (D50) was determined by dispersing the core-shell type polymer particles or inorganic particles used according to Examples 1-3 and Comparative Examples 1-3 in a dispersion medium, introducing the resultant product to a commercially available laser diffraction particle size analyzer (e.g. Microtrac MT 3000), irradiating ultrasonic waves with a frequency of about 28 kHz thereto at an output of 60 W, and calculating the average particle diameter (D50) at a point of 50% in the particle diameter distribution determined by the analyzer. The average particle diameter of the core portion of each type of core-shell type polymer particles was calculated by using the core portion particles before forming the shell portion in the same manner as described above.

### Air Permeability (Gurley)

The air permeability of the separator according to each of Examples 1-3 and Comparative Examples 1-3 was determined by using the method of ASTM D726-94. The results are shown in the following Table 1. Herein, 'Gurley' refers to resistance against air flow and was measured by using a Gurley densometer. The air permeability value described herein is expressed as time (sec), i.e. air permeation time, required for 100 cc of air to pass through the 1 in² section of the separator according to each of Examples 1-3 and Comparative Examples 1-3 under a pressure of 12.2 inH₂O.

### Electrical Resistance (ER)

The separator according to each of Examples 1-3 and Comparative Examples 1-3 was impregnated with an electrolyte (ethylene carbonate (EC):diethyl carbonate (DEC) = 3:7, LiPF₆ 1.0 M), and the AC resistance was measured. The results are shown in the following Table 1. Herein, 'AC resistance' is a resistance value measured at 1 kHz by using an instrument available from Hioki.

### Adhesion to Electrode under Wetting with Electrolyte

- Test Instrument: UTM (LLOYD INSTRUMENT LS 1)
- Preparation of Specimen and Test Method

First, lithium cobalt-based composite oxide, a conductive material (Denka black) and a binder (PVdF) were weighed at a weight ratio of 95:2.5:2.5, and the ingredients were introduced to and mixed in N-methyl pyrrolidone (NMP) to prepare a cathode mixture. The cathode mixture was coated on aluminum foil having a thickness of 20 µm to a thickness of 200 µm, followed by pressing and drying, to obtain a cathode.

The electrolyte used herein was prepared by dissolving 1 M LiPF₆ in a mixed solvent containing ethyl carbonate (EC) and ethyl methyl carbonate (EMC) at a volume ratio of 1:1.

Next, 1) the cathode and the separator were cut into a size of 20 x 60 mm. 2) The cathode was stacked with the separator, the resultant structure was inserted to an aluminum (Al) pouch, and the aluminum pouch was cut into a size of 200 x 80 mm and folded into a size of 100 x 80 mm, followed by side sealing. 3) The electrolyte was injected to the pouch in an amount of 1 g, followed by vacuum sealing. 4) The sealed pouch battery was pre-aged for 1 day. 5) The pre-aged pouch battery was heated/pressurized at 60°C under 5 kgf/cm² for 10 minutes through a jig configured to fix the pre-aged pouch battery. 6) The heated/pressurized pouch battery was opened to take the cathode bound to the separator in a wet state. 7) The cathode bound to the separator was fixed on a glass plate by using a double-sided tape, right after it was taken out from the battery in such a manner that the cathode might face the slide glass. 8) The separator portion of the specimen was peeled at a temperature of 25°C at an angle of 90° under a rate of 200 mm/sec, and the peel strength was determined as adhesion between the cathode and the separator (average value was determined over a range of 30-70% of the test region, except the start point and the end point).

### Life Characteristics of Battery

### <Manufacture of Secondary Battery>

First, lithium cobalt-based composite oxide, a conductive material (Denka black) and a binder (PVdF) were weighed at a weight ratio of 95:2.5:2.5, and the ingredients were introduced to and mixed in N-methyl pyrrolidone (NMP) to prepare a cathode mixture. The cathode mixture was coated on aluminum foil having a thickness of 20 µm to a thickness of 200 µm, followed by pressing and drying, to obtain a cathode.

Li metal was used as an anode, and a carbonate-based electrolyte was prepared by dissolving 1 M LiPF₆ in a mixed solvent containing ethyl carbonate (EC) and ethyl methyl carbonate (EMC) at a volume ratio of 1:1.

The separator according to each of Examples 1-3 and Comparative Examples 1~3 was interposed between the cathode and the anode, the resultant structure was received in a pouch casing, and the electrolyte was injected thereto, followed by sealing, to obtain a secondary battery.

### <Test Method>

Each secondary battery was charged/discharged in a 25°C chamber at 0.1 C in a voltage range of 3.0-4.4 V for the first time, and tested in terms of life characteristics for 300 cycles, while being charged at 1.0 C and discharged at 1.0 C. Herein, the life characteristics are represented as a capacity retention by calculating the ratio of the discharge capacity after 300 cycles based on the discharge capacity at the first cycle. The results are shown in the following Table 1.

**[Table 1]**

| | Comp. Ex. 1 | Comp. Ex. 2 | Comp. Ex. 3 | Ex. 1 | Ex. 2 | Ex. 3 |
|---|---|---|---|---|---|---|
| Porous coating layer loading amount (g/m²) | 6.51 | 7.53 | 7.23 | 7.21 | 6.89 | 7.10 |
| Gurley value (100cc/sec) | 143 | 150 | 135 | 155 | 140 | 144 |
| ER (Ω) | 0.62 | 0.63 | 0.60 | 0.65 | 0.61 | 0.61 |
| Life characteristics Capacity retention based on | 88 | 90 | 90 | 95 | 95 | 97 |
| discharge capacity after 300 cycles (%) (25°C) (1.0 C/1.0 C) | | | | | | |
| Adhesion to electrode under wetting with electrolyte (gf/20mm) | 7.5 | 12.4 | 8.2 | 22.5 | 21.5 | 22.8 |

Referring to Table 1, the separator according to each of Examples 1-3 using core-shell type polymer particles having a core portion and a shell portion different from each other in terms of glass transition temperature and containing a polymer grafted to the surface of the shell portion, as a binder polymer, provides a battery with significantly improved life characteristics and shows significantly improved adhesion to an electrode (cathode) under the condition of wetting with an electrolyte, as compared to the separators according to Comparative Examples 1-3.

## Claims

1. A separator comprising:
a porous polymer substrate; and
a porous coating layer disposed on at least one surface of the porous polymer substrate, and comprising a plurality of inorganic particles and a binder polymer disposed partially or totally on the surfaces of the inorganic particles so that the inorganic particles are interconnected and fixed,
wherein the binder polymer comprises core-shell type polymer particles having a core portion and a shell portion surrounding the core portion,
the core portion polymer contained in the core portion and the shell portion polymer contained in the shell portion have a different glass transition temperature, and
a polymer containing an ingredient capable of being eluted with an electrolyte and linked through a chemical bond is grafted to the surface of the shell portion;
wherein the polymer grafted to the surface of the shell portion comprises polyvinyl alcohol (PVA) or copolymer thereof, polyethylene glycol (PEG) or copolymer thereof, polypropylene glycol (PPG) or copolymer thereof, polyvinyl acetate (PVAc) or copolymer thereof, polyacrylonitrile (PAN) or copolymer thereof, or two or more of them,
wherein the content of the polymer grafted to the surface of the shell portion is 1-30 wt% based on the total weight of the core-shell type polymer particles; and
wherein the core portion polymer has a glass transition temperature of 85°C or higher, and the shell portion polymer has a glass transition temperature of -100 to 20°C, or
wherein the core portion polymer has a glass transition temperature of -100 to 20°C, and the shell portion polymer has a glass transition temperature of 85°C or higher,
wherein the glass transition temperature is determined as specified in the description.

2. The separator according to claim 1, wherein the core portion polymer has a glass transition temperature of 85°C or higher, and the shell portion polymer has a glass transition temperature of -100 to 20°C, and
wherein the core portion polymer comprises polystyrene, polystyrene copolymer, polymethyl methacrylate, polymethyl methacrylate copolymer, polyamide-based polymer, or two or more of them, and the shell portion polymer comprises acrylate-based polymer, rubber-based polymer, urethane-based polymer, silicone-based polymer, or two or more of them.

3. The separator according to claim 1, wherein the core portion polymer has a glass transition temperature of -100 to 20°C, and the shell portion polymer has a glass transition temperature of 85°C or higher, and
wherein the core portion polymer comprises acrylate-based polymer, rubber-based polymer, urethane-based polymer, silicone-based polymer, or two or more of them, and the shell portion polymer comprises polystyrene-based polymer, poly(meth)acrylate-based polymer, polyamide-based polymer, or two or more of them.

4. The separator according to claim 1, wherein the higher glass transition polymer particles have an average particle diameter of 100 nm to 1 µm, determined as specified in the description.

5. The separator according to claim 1, wherein the ratio of the average particle diameter of the core portion based on the average particle diameter of the core-shell type polymer particles is 50-90%. higher glass transition

6. The separator according to claim 1, wherein the core-shell type polymer particle comprises 100 parts by weight of the core portion and 100-300 parts by weight of the shell portion.

7. The separator according to claim 1, wherein the core-shell type polymer particles comprise: core-shell type polymer particles in which the shell portion polymer has a polyolefin-based porous temperature as compared to the core portion polymer; core-shell type polymer particles in which the shell portion polymer has a lower glass transition temperature as compared to the core portion polymer; or both.

8. An electrochemical device comprising a cathode, an anode and a separator interposed between the cathode and the anode, wherein the separator is the same as defined in any one of claims 1 to 7.

9. The electrochemical device according to claim 8, which is a lithium secondary battery.

## Patentansprüche

1. Separator, umfassend:
ein poröses Polymersubstrat; und
eine poröse Beschichtungsschicht, die auf mindestens einer Oberfläche des porösen Polymersubstrats angeordnet ist und eine Vielzahl von anorganischen Partikeln und ein Bindemittelpolymer umfasst, das teilweise oder vollständig auf den Oberflächen der anorganischen Partikel angeordnet ist, um die anorganischen Partikel miteinander zu verbinden und zu fixieren;
wobei das Bindemittelpolymer Polymerpartikel vom Kern-Schalen-Typ umfasst, die einen Kernabschnitt und einen den Kernabschnitt umgebenden Schalenabschnitt aufweisen,
das in dem Kernabschnitt enthaltene Kernabschnittspolymer und das in dem Schalenabschnitt enthaltene Schalenabschnittspolymer eine unterschiedliche Glasübergangstemperatur aufweisen, und
ein Polymer, das einen Bestandteil enthält, der mit einem Elektrolyten eluiert werden kann und über eine chemische Bindung verbunden ist, auf die Oberfläche des Schalenabschnitts aufgepfropft wird;
wobei das auf die Oberfläche des Schalenabschnitts aufgepfropfte Polymer Polyvinylalkohol (PVA) oder ein Copolymer davon, Polyethylenglykol (PEG) oder ein Copolymer davon, Polypropylenglykol (PPG) oder ein Copolymer davon, Polyvinylacetat (PVAc) oder ein Copolymer davon, Polyacrylonitril (PAN) oder ein Copolymer davon oder zwei oder mehr davon umfasst,
wobei der Gehalt des auf die Oberfläche des Schalenabschnitts aufgepfropften Polymers 1-30 Gew.-% auf der Grundlage des Gesamtgewichts der Polymerpartikel vom Kern-Schalen-Typ beträgt; und
wobei das Kernabschnittspolymer eine Glasübergangstemperatur von 85 °C oder höher aufweist und das Schalenabschnittspolymer eine Glasübergangstemperatur von -100 bis 20 °C aufweist, oder
wobei das Kernabschnittspolymer eine Glasübergangstemperatur von -100 bis 20 °C aufweist und das Schalenabschnittspolymer eine Glasübergangstemperatur von 85 °C oder höher aufweist,
wobei die Glasübergangstemperatur wie in der Beschreibung angegeben bestimmt wird.

2. Separator nach Anspruch 1, wobei das Kernabschnittspolymer eine Glasübergangstemperatur von 85 °C oder höher aufweist und das Schalenabschnittspolymer eine Glasübergangstemperatur von -100 bis 20 °C aufweist, und
wobei das Kernabschnittspolymer Polystyrol, ein Polystyrol-Copolymer, Polymethylmethacrylat, ein Polymethylmethacrylat-Copolymer, ein Polymer auf Polyamidbasis oder zwei oder mehr davon umfasst, und das Schalenabschnittspolymer ein Polymer auf Acrylatbasis, ein Polymer auf Gummibasis, ein Polymer auf Urethanbasis, ein Polymer auf Silikonbasis oder zwei oder mehr von 10 davon umfasst.

3. Separator nach Anspruch 1, wobei das Kernabschnittspolymer eine Glasübergangstemperatur von -100 bis 20 °C aufweist und das Schalenabschnittspolymer eine Glasübergangstemperatur von 85 °C oder höher aufweist, und
wobei das Kernabschnittspolymer ein Polymer auf Acrylatbasis, ein Polymer auf Gummibasis, ein Polymer auf Urethanbasis, ein Polymer auf Silikonbasis oder zwei oder mehr davon umfasst, und das Schalenabschnittpolymer ein Polymer auf Polystyrolbasis, ein Polymer auf Poly(meth)acrylat-Basis, ein Polymer auf Polyamidbasis, oder zwei oder mehr davon umfasst.

4. Separator nach Anspruch 1, wobei die Polymerpartikel mit einer höheren Glasübergangstemperatur einen durchschnittlichen Partikeldurchmesser von 100 nm bis 1 µm aufweisen, wie in der Beschreibung angegeben.

5. Separator nach Anspruch 1, wobei das Verhältnis des durchschnittlichen Partikeldurchmessers des Kernabschnitts auf der Grundlage des durchschnittlichen Partikeldurchmessers der Polymerpartikel vom Kern-Schalen-Typ 50-90 % beträgt. höherer Glasübergang

6. Separator nach Anspruch 1, wobei das Polymerpartikel vom Kern-Schalen-Typ 100 Gewichtsteile des Kernabschnitts und 100-300 Gewichtsteile des Schalenabschnitts umfasst.

7. Separator nach Anspruch 1, wobei die Polymerpartikel vom Kern-Schalen-Typ umfassen: Polymerpartikel vom Kern-Schalen-Typ, bei denen das Schalenabschnittpolymer eine poröse Temperatur auf Polyolefinbasis im Vergleich zu dem Kernabschnittpolymer aufweist; Polymerpartikel vom Kern-Schalen-Typ, bei denen das Schalenabschnittpolymer eine niedrigere Glasübergangstemperatur im Vergleich zu dem Kernabschnittpolymer aufweist; oder beides.

8. Elektrochemische Vorrichtung, die eine Kathode, eine Anode und einen Separator umfasst, der zwischen der Kathode und der Anode eingefügt ist, wobei der Separator derselbe ist wie in einem der Ansprüche 1 bis 7 definiert.

9. Elektrochemische Vorrichtung nach Anspruch 8, bei der es sich um eine Lithium-Sekundärbatterie handelt.

## Revendications

1. Séparateur comprenant :
un substrat polymère poreux ; et
une couche de revêtement poreuse disposée sur au moins une surface du substrat polymère poreux, et comprenant une pluralité de particules inorganiques et un polymère liant disposé partiellement ou totalement sur les surfaces des particules inorganiques de sorte que les particules inorganiques soient reliées entre elles et fixées,
dans lequel le polymère liant comprend des particules polymères de type noyau-enveloppe présentant une partie noyau et une partie enveloppe entourant la partie noyau,
le polymère de partie noyau contenu dans la partie noyau et le polymère de partie enveloppe contenu dans la partie enveloppe présentent une température de transition vitreuse différente, et
un polymère contenant un ingrédient ayant des capacités d'élution d'électrolyte et lié par une liaison chimique est greffé sur la surface de la partie enveloppe ;
dans lequel le polymère greffé sur la surface de la partie enveloppe comprend de l'alcool polyvinylique (PVA) ou un copolymère de celui-ci, du polyéthylène glycol (PEG) ou un copolymère de celui-ci, du polypropylène glycol (PPG) ou un copolymère de celui-ci, de l'acétate de polyvinyle (PVAc) ou un copolymère de celui-ci, du polyacrylonitrile (PAN) ou un copolymère de celui-ci, ou deux ou plus de ceux-ci,
dans lequel la teneur en polymère greffé sur la surface de la partie enveloppe est de 1 à 30 % en poids sur la base du poids total des particules de polymère de type noyau-enveloppe ; et
dans lequel le polymère de partie noyau présente une température de transition vitreuse de 85 °C ou plus, et le polymère de partie enveloppe présente une température de transition vitreuse de -100 à 20 °C, ou
dans lequel le polymère de partie noyau présente une température de transition vitreuse de -100 à 20 °C, et le polymère de partie enveloppe présente une température de transition vitreuse de 85 °C ou plus,
dans lequel la température de transition vitreuse est déterminée tel qu'énoncé dans la description.

2. Séparateur selon la revendication 1, dans lequel le polymère de partie noyau présente une température de transition vitreuse de 85 °C ou plus, et le polymère de partie enveloppe présente une température de transition vitreuse de -100 à 20 °C, et
dans lequel le polymère de partie noyau comprend du polystyrène, un copolymère de polystyrène, du polyméthacrylate de méthyle, un copolymère de polyméthacrylate de méthyle, un polymère à base de polyamide, ou deux ou plus de ceux-ci, et le polymère de partie enveloppe comprend un polymère à base d'acrylate, un polymère à base de caoutchouc, un polymère à base d'uréthane, un polymère à base de silicone, ou deux ou plus de 10 ceux-ci.

3. Séparateur selon la revendication 1, dans lequel le polymère de partie noyau présente une température de transition vitreuse de -100 à 20 °C, et le polymère de partie enveloppe présente une température de transition vitreuse de 85 °C ou plus, et
dans lequel le polymère de partie noyau comprend un polymère à base d'acrylate, un polymère à base de caoutchouc, un polymère à base d'uréthane, un polymère à base de silicone, ou deux ou plus de ceux-ci, et le polymère de partie enveloppe comprend un polymère à base de polystyrène, un polymère à base de poly(méth)acrylate, un polymère à base de polyamide, ou deux ou plus de ceux-ci.

4. Séparateur selon la revendication 1, dans lequel les particules de polymère de transition vitreuse supérieure présentent un diamètre de particule moyen de 100 nm à 1 µm, déterminé comme énoncé dans la description.

5. Séparateur selon la revendication 1, dans lequel le rapport du diamètre moyen de particule de la partie noyau sur la base du diamètre moyen de particule des particules de polymère de type noyau-enveloppe est de 50 à 90 %. transition vitreuse supérieure

6. Séparateur selon la revendication 1, dans lequel la particule de polymère de type noyau-enveloppe comprend 100 parties en poids de la partie noyau et 100 à 300 parties en poids de la partie enveloppe.

7. Séparateur selon la revendication 1, dans lequel les particules de polymère de type noyau-enveloppe comprennent : des particules de polymère de type noyau-enveloppe dans lesquelles le polymère de partie enveloppe présente une température poreuse à base de polyoléfine par rapport au polymère de partie noyau ; des particules de polymère de type noyau-enveloppe dans lesquelles le polymère de partie enveloppe présente une température de transition vitreuse inférieure par rapport au polymère de partie noyau ; ou les deux.

8. Dispositif électrochimique comprenant une cathode, une anode et un séparateur interposé entre la cathode et l'anode, dans lequel le séparateur est le même que celui défini dans l'une quelconque des revendications 1 à 7.

9. Dispositif électrochimique selon la revendication 8, qui est un accumulateur au lithium.
